Europäisches Patentamt

European Patent Office    (11) Publication number: **0 019 306**

Office européen des brevets    **A1**

(19)

(12)    # EUROPEAN PATENT APPLICATION

(21) Application number: **80200112.3**

(22) Date of filing: **11.02.80**

(51) Int. Cl.³: **F 16 B 12/50**

(30) Priority: **22.05.79 NL 7904002**

(43) Date of publication of application:
**26.11.80 Bulletin 80/24**

(84) Designated Contracting States:
**AT BE CH DE FR GB IT LU NL SE**

(71) Applicant: **B.V. Ralan**
**Industrieweg 12**
**NL-5492 NG St. Oedenrode(NL)**

(72) Inventor: **van de Klok, Karel Jozeph**
**Johanna van Brabantlaan 51**
**St. Oedenrode(NL)**

(74) Representative: **Noz, Franciscus Xaverius, Ir.**
**Boschdijk 155**
**NL-5612 HB Eindhoven(NL)**

(54) Connection structure.

(57) A connection structure between three profiles (1,3,4) being at an angle to one another and being interconnected with the aid of a coupling piece (2) having parts located in two profiles (3,4) and being fastened to the third profile (1) with the aid of a bolt or the like, the position of which is such that the centre line of the bolt coincides at least substantially with the bisector of the angle between the profiles (3,4) receiving the parts of the coupling piece (2), whereby the coupling piece (2) and the two profiles (3,4) receiving the parts of the coupling piece have co-operating elements (10,21) being at an angle other than 90° to the longitudinal axes of the profiles (3,4) concerned.

*Fig.1.*

*Fig.3.*

-1-

## Connection Structure.

The invention relates to a connection structure between three profiles being at an angle to one another and being fastened to one another with the aid of a coupling piece having parts located in two profiles and being secured to the third profile with the aid of a bolt or the like occupying a position such that the centre line of the bolt coincides at least substantially with the bisector of the angle between the profiles receiving the parts of the coupling piece.

Such a connection structure is known from Dutch Patent Application 7707877. In this known structure the coupling piece has a fairly complicated shape and the free ends of the parts of the coupling piece inserted into the profiles are constructed so that these parts can be bent out with the aid of a bolt extending perpendicularly to the profiles concerned in order to clamp the parts against the inner surfaces of the profiles.This involves a comparatively complicated construction comprising comparatively many parts, whereas an effective clamping of the two profiles receiving the parts of the coupling piece against the third profile cannot be guaranteed.

The invention has for its object to provide a connection structure of the kind set forth in which the disadavantages of the known structure can be avoided.

According to the invention this can be achieved by providing the coupling piece and the two profiles receiving the parts of the coupling piece with relatively co-operating rims being at an angle differing from 90° to the longitudinal axes of the profiles concerned.

When such an embodiment is used, a satisfactory connection can be obtained between the profiles receiving the coupling piece and the coupling piece, whilst in assembling the connection structure the coupling piece can uniformly clamp the profiles receiving the coupling piece against the third profile.

It should be noted that Dutch Patent Application 7013781 discloses a connection structure between three profiles in which a coupling piece located mainly outside the profiles is used, which is provided with protuberances snapping into recesses of two profiles. The relatively co-operating rims of the protuberances and the profiles are at right angles to the direction of length of the profiles concerned, so that also in this case despite the use of a relatively complicated structure effective clamping cannot be ensured.

The invention will be described more fully hereinafter with reference to an embodiment of the structure according to the invention shown schematically in the accompanying Figures.

Fig. 1 is a plan view of a connection structure in accordance with the invention.

Fig. 2 is an elevational view of a coupling piece in the direction of the arrow II in Fig. 1.

Fig. 3 is a side elevation of the coupling piece shown in Fig. 2.

Fig. 4 is a plan view of one of the profiles.

Fig. 5 is an elevational view in the direction of the arrow V in Fig. 4.

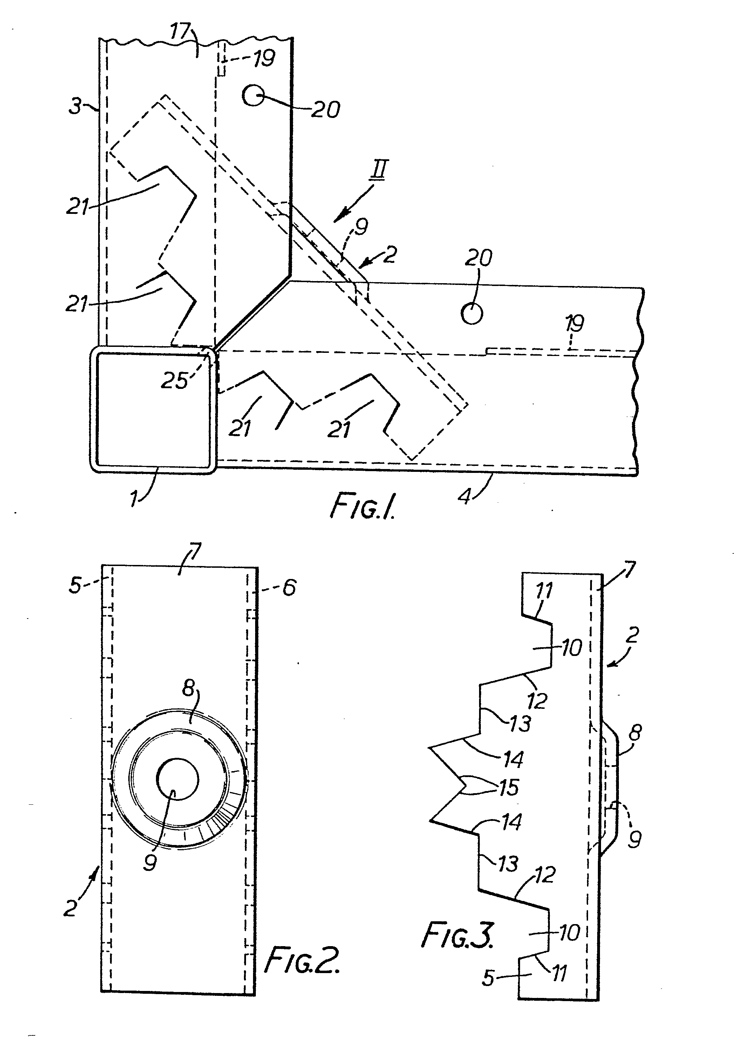

In the embodiment shown in Fig. 1 a square-section profile 1, for example , a table leg is connected with the aid of a coupling piece 2 with two profiles 3 and 4 extending at right angles to one another and at right angles to the profile 1 forming, for example, supports for a table top.

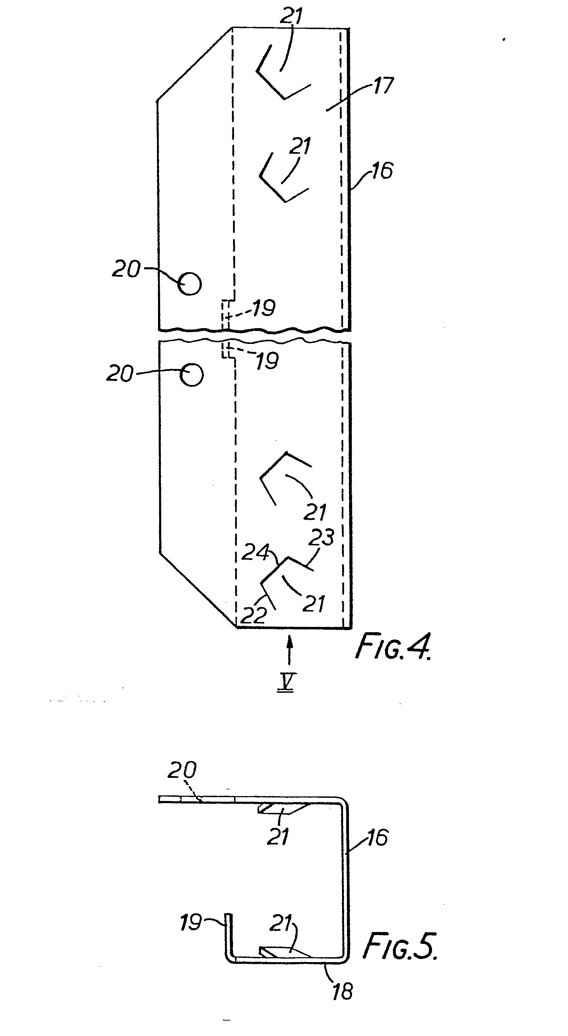

Referring in particular to Figs. 2 and 3, the coupling piece has an at least substantially U-shaped cross-section having two at least substantially parallel limbs 5 and 6 and a web 7 interconnecting the two limbs. A cemtral portion 8 of the web 7 deformed into an outwardly bulging part and a hole 9 is made in the centre of said bulging part 8.

From Fig. 3 it will be apparent that the width of the two limbs 5 and 6 increases stepwise from the ends toward the inside. The outermost parts of the limbs have recesses 10 tapering towards the web 7 and being each bounded by a boundary edge 11 near the end of the coupling piece 2 and by a further boundary edge 12, which is longer than the boundary edge 11 and terminates in a boundary edge 13 of a limb 5 and 6 respectively extending paralell to the web 7. The ends of the boundary edges 13 remote from the ends of the boundary edges 12 join boundary edges 14 extending parallel to the boundary edges 12 and approaching one another in a direction away from the web 7, as will be seen in Fig. 3. The free ends of these boundary edges 14 are joined by further boundary edges 15 extending towards one another from the ends of the boundary edges 14 towards the web 7. The angle between the two boundary edges 15 is at least substantially equal to the angle between two limbs of the profile 1, as will be apparent from Fig. 1.

From Figs 4 and 5 it will be seen that the equally shaped profiles 3 and 4 have a web 16 joined by relatively parallel limbs 17 and 18. A rim 19 of the limb 18 is bent over at right angles with respect to the limb 18 and the length of said rim 19 is shorter than that of the limb 18 so that, as will be obvious from Fig. 4, the ends of the rim 19 are removed over part of the length of the profile.

The limb 17 is completely flat so that the free end of the limb projects beyond the limb 18. This free end has holes 20 for fastening a table top or the like.

Over part of their width the limbs 4 are bevelled near the ends, as will be seer from Fig. 4, in order to allow an orthogonal disposition of two profiles of this kind in the manner illustrated in Fig. 1.

Near each end of a limb 17 and of a limb 18 two ears 21 are punched out and depressed towards the opposite limb. Each ear is bounded by two boundary edges 22 and 23 being at an angle to one another and at an angle differing from $90^{\circ}$ to the longitudinal axis of the profile, said edges extending towards one another in a direction away from the web 16 and being interconnected at their free ends by a boundary rim 24 being at an angle of about $45^{\circ}$ to the longitudinal axis of the profile concerned.

In order to interconnect the profiles 1, 3 and 4, they are relatively disposed in the position shown in Fig. 1 and the coupling piece 2 is introduced between the limbs 17 and 18 of the profiles 3 and 4 in the manner also shown in Fig. 1. A bolt not shown in the Figures can be passed through the opening 9 and through a further opening 25 in the profile 1

-4-

and screwed into a nut included opening 25 so that by tightening said bolt the coupling piece 2 is displaced in the direction of the arrow 2 with respect to the profile 1. The structure is such that particularly the boundary edges 23 of the limbs of the profiles located furthest inwards with respect to the ends, as a result of which upon tightening of the bolt the coupling piece 2 exerts a force in the direction towards the profile 1 on the profiles 3 and 4. The boundary edges 22 of the tongues 21 with the co-operating boundary edges 12 and 14 of the coupling piece will perform some guiding function for the profiles 3 and 4, it is true, but this co-operating between the boundary edges 22, 12 and 14 will not impede clamping of the profiles 3 and 4 against the profile 1. The structure is furthermore such that in the clamped state the boundary edges 15 are not yet in contact with the outer circumference of the profile 1 so that at any time a firm clamping between the profiles can be guaranteed, whilst the boundary edges 15 can ensure a correct orientation of the coupling piece 2 and hence of the profiles 3 and 4 with respect to the leg 1.

From the foregoing it will be obvious that by means of a small number of simple parts of cheap manufacture a particularly effective and solid connection between three profiles at an angle to one another can be established.

-1-
## Claims

1.      A connection structure between  three profiles being at an angle to one another and being interconnected with the aid of a coupling piece having parts located in two profiles and being fastened to the third profile with the aid of a bolt or the like, the position of which is such that the centre line of the bolt coincides at least substantially with the bisector of the angle between the profiles receiving the parts of the coupling piece characterized in that the coupling piece and the two profiles receiving the parts of the coupling piece have relatively co-operating rims being at an angle differing from 90$^{\circ}$ to the longitudinal axes of the profiles concerned.

2.      A connection structure as claim in Claim 1, characterized in that the profiles have punched out tongues which co-operate with the coupling piece.

3.      A connection structure as claimed in Claim 1 or 2 characterized in that at least the ends of the profiles receiving the parts of the coupling piece have a U-shaped cross-section and the coupling piece also has an at least substantially U-shaped cross-section so that the limbs of the U-shaped coupling piece engage the relatively parallel limbs of the profiles receiving the coupling piece.

4.      A connection structure as claimed in anyone of the preceding claims characterized in that the coupling piece has tapering recesses receiving correspondingly shaped tongues of the profiles co-operating with the coupling piece.

5.      A connection structure as claimed in anyone of the preceding Claims characterized in that the coupling piece has recesses for receiving at least part of the third profile, the construction being such that the boundary edges of said recesses in the mounted state are located at a short distance from the outer wall of said third profile.

0019306

*FIG.I.*

*FIG.2.*

*FIG.3.*

0019306

FIG.4.

V

FIG.5.

European Patent
Office

**EUROPEAN SEARCH REPORT**

Application number

EP 80 20 0112

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| | AT – B – 347 629 (BLAHA)<br>* Page 3, lines 28-52; figure 3 * | 1,3 | F 16 B 12/50 |
| | FR – A – 2 179 459 (A/S RAACO)<br>* Pages 2,3; figures * | 1,3 | |
| | FR – A – 1 286 872 (FILLEUL)<br>* Page 2; figure 2 * | 1,2 | |
| | | | TECHNICAL FIELDS SEARCHED (Int.Cl. ³) |
| | FR – A – 2 062 353 (HAFELE)<br>* Page 5; figures 5,9 * | 1-3,5 | F 16 B 12/00<br>7/00 |
| | CH – A – 480 044 (KIHM)<br>* Columns 1,2; figures * | 1,3 | |
| | FR – A – 1 317 272 (JOUK)<br>* Page 2; figures * | 1,3 | |
| | FR – A – 1 272 813 (KUHN)<br>* Page 1; figures * | 1 | CATEGORY OF CITED DOCUMENTS |
| D,A | DE – A – 2 723 980<br>& NL – A – 77 07877 | 1 | X: particularly relevant<br>A: technological background<br>O: non-written disclosure<br>P: intermediate document<br>T: theory or principle underlying the invention<br>E: conflicting application<br>D: document cited in the application<br>L: citation for other reasons |
| | The present search report has been drawn up for all claims | | &: member of the same patent family, corresponding document |

| Place of search | Date of completion of the search | Examiner |
|---|---|---|
| The Hague | 24-03-1980 | FLORES |

EPO Form 1503.1   06.78